# FASCICULE DE BREVET EUROPEEN

(11) **EP 2 912 294 B1**
(45) Date de publication et mention de la délivrance du brevet: **10.07.2019**
(21) Numéro de dépôt: 13747475.5
(22) Date de dépôt: 22.07.2013
(51) Int. Cl.: F02F 7/00, F16F 15/315

(54) **LIAISON VILEBREQUIN - CARTER-CYLINDRES**
VERBINDUNG FÜR KURBELWELLEN-ZYLINDER-GEHÄUSE
CRANKSHAFT-CYLINDER HOUSING LINK

(30) Priorité: 24.10.2012 FR 1260125
(43) Date de publication de la demande: 02.09.2015
(73) Titulaire: Renault S.A.S., 92100 Boulogne-Billancourt (FR)
(72) Inventeur: JUSTET, Frédéric, F-91190 Gif Sur Yvette (FR); ABRAMCZUK, Marek, F-94260 Fresnes (FR)
(86) Numéro de dépôt international: PCT/FR2013/051763
(87) Numéro de publication internationale: WO 2014/064348

(56) Documents cités:
- EP-A1- 1 561 926
- DE-C- 935 606
- GB-A- 269 713

## Description

### Domaine technique de l'invention

La présente invention se rapporte au domaine des véhicules automobiles et concerne notamment un carter-cylindres.

L'invention concerne plus particulièrement un positionnement simple et fiable d'un vilebrequin dans un carter-cylindres.

L'invention concerne également un moteur à combustion interne de véhicule automobile comportant un carter-cylindres disposé au dessus d'un carter d'huile, la liaison entre le carter d'huile et le carter-cylindres étant continue sur tout le pourtour du carter-cylindres.

### Etat de la technique

Les moteurs à combustion interne installés dans le compartiment moteur d'un véhicule automobile comprennent de façon connue un carter-cylindres installé au dessus d'un carter d'huile. Le carter-cylindres comprend une chambre de bielles dans laquelle est disposé un vilebrequin monté mobile en rotation autour d'un axe longitudinal horizontal et relié à des pistons coulissant dans un mouvement de va-et-vient dans des cylindres d'axes sensiblement vertical installés dans le carter-cylindres. Le carter-cylindres est en contact avec le carter d'huile au niveau d'un plan de joint le long d'un trottoir d'étanchéité accueillant un joint d'étanchéité. A une extrémité du vilebrequin est fixé solidaire un volant moteur disposé à l'extérieur du carter cylindres. Le carter cylindres présente donc dans une paroi d'extrémité un orifice circulaire traversé par le vilebrequin fixé au volant moteur.

De manière connue le vilebrequin comporte une extrémité axiale débouchant à l'extérieur de la chambre par ledit orifice. Pour des questions d'accessibilité de montage du vilebrequin dans la chambre de bielles, l'orifice est prolongé par une ouverture dans ladite paroi d'extrémité du carter cylindres, se terminant au niveau plan de joint avec le carter d'huile. Une fois le vilebrequin monté dans la chambre, ladite ouverture est fermée par une plaque d'étanchéité fixée contre la paroi d'extrémité.

Un inconvénient de ce système est que la plaque d'étanchéité est fixée contre la paroi d'extrémité du carter-cylindres par des vis, ce qui nécessite de réaliser des lumières de passage pour lesdites vis ainsi que des pions de positionnement de ladite plaque.

Un autre inconvénient est que la plaque présentant une partie basse destinée au contact avec le carter d'huile, un jeu subsiste entre ladite partie basse de la plaque et le carter d'huile qui nécessite d'être étanchéifié par une bande de joint.

La publication FR 2734618 divulgue un volant moteur fixé solidaire en rotation à une extrémité d'un vilebrequin par l'intermédiaire d'une denture d'orientation axiale maintenue en position active par un élément à visser central dans un filetage du vilebrequin. Ledit volant et ledit vilebrequin sont reliés l'un à l'autre et maintenus sous un effort de précontrainte élastique par l'intermédiaire d'un élément de transmission comportant une embase dirigée axialement vers le vilebrequin et destinée à s'engager dans une ouverture concentrique correspondante dans le vilebrequin. Un inconvénient de ce système de fixation est que la mise en oeuvre nécessite la fabrication d'un élément intermédiaire entrainant une phase d'assemblage difficile et que l'étanchéité est assurée par un joint annulaire entourant l'extrémité du vilebrequin qui de ce fait dépasse d'une ouverture dans la paroi du carter cylindres logeant le vilebrequin.

La publication GB 269 713 A divulgue toutes les caractéristiques du préambule de la revendication 1.

### Bref résumé de l'invention

Un des buts de l'invention est de pallier ces inconvénients et l'invention a pour objet un carter cylindres comportant une chambre de bielles dans laquelle est logé mobile en rotation autour d'un axe longitudinal un vilebrequin à une extrémité duquel est fixé solidaire un volant moteur disposé à l'extérieur du carter cylindres, ledit orifice étant circulaire et disposé au dessus d'un plan de joint ou de liaison entre le carter-cylindres et le carter d'huile.

L'objet de l'invention est caractérisé plus particulièrement par un moteur à combustion interne de véhicule automobile comportant :
- un carter d'huile au-dessus duquel est fixé,
- un carter-cylindres comportant une chambre délimitée par une paroi présentant un orifice destiné à être traversé par une extrémité d'un vilebrequin logé dans ladite chambre, et un volant moteur fixé solidaire en rotation à ladite extrémité et disposé à l'extérieur de ladite chambre,
caractérisé en ce que le volant moteur comporte une protubérance tubulaire apte à entourer l'extrémité du vilebrequin, ladite protubérance du volant débouchant à l'intérieur de la chambre par l'orifice circulaire.

De manière avantageuse, ladite protubérance est fixée à l'extrémité du vilebrequin monté dans la chambre du carter-cylindres pour faciliter l'assemblage du volant moteur avec le vilebrequin.

Selon d'autres caractéristiques de l'invention :
- l'extrémité du vilebrequin est disposée dans la chambre de bielles.

Avantageusement, le vilebrequin est entouré par les parois de chambre ce qui facilite le montage dudit vilebrequin dans ladite chambre.
- l'extrémité du vilebrequin est conique.

Avantageusement, une liaison conique entre le vilebrequin et le volant moteur supprime tout jeu en rotation entre le vilebrequin et le volant moteur.
- l'orifice dans la paroi du carter-cylindres est circulaire et disposé au dessus d'un plan de joint entre le carter-cylindres et le carter d'huile.

De manière avantageuse, la mise en place du vilebrequin ne nécessite pas une ouverture se prolongeant jusqu'au plan de joint et donc d'une plaque supplémentaire pour réduire ladite ouverture à un orifice circulaire.

De manière avantageuse, le carter cylindres ne présentant pas d'ouverture supplémentaire est donc plus rigide.
- la partie d'extrémité axiale du volant comporte une lumière présentant une partie conique complémentaire à l'extrémité du vilebrequin, ladite lumière est traversée par un moyen de fixation du volant au vilebrequin.

Avantageusement, la fixation du volant moteur au vilebrequin est simplifiée.
- la conicité de l'extrémité du vilebrequin est comprise entre 2° et 7°.

Avantageusement, la faible conicité permet la mise en position plus aisée du volant moteur contre le vilebrequin avant la mise en place du moyen de fixation.
- le volant moteur présente une résistance élastique supérieure à 400 MPa.

Avantageusement, le volant moteur est en acier ou en fonte avec une résistance élastique supérieure à 400MPa permettant une déformation de la protubérance lors de l'enfoncement ladite protubérance du volant moteur autour de l'extrémité du vilebrequin.
- la partie d'extrémité axiale du volant est entourée par une bague à lèvre annulaire. L'orifice étant circulaire, un joint standard de bague à lèvre annulaire est disposé entourant la partie d'extrémité du volant débouchant à l'intérieur de la chambre par ledit orifice.
- le trottoir d'étanchéité du carter-cylindres est continu.

Avantageusement, le trottoir d'étanchéité du carter-cylindres au pied de la paroi d'extrémité présentant l'orifice est continu, l'étanchéité entre le carter-cylindres et le carter d'huile est simplifié.
- le carter d'huile fixé en dessous du carter-cylindres est en plastique.

Avantageusement, le carter d'huile n'est pas soumis à des contraintes particulières en fonctionnement du moteur et peut donc être en plastique, ce qui diminue le coût du moteur et son poids.

### Brève description des figures

D'autres caractéristiques et avantages de l'invention apparaîtront à la lecture de la description détaillée qui suit pour la compréhension de laquelle on se reportera aux dessins annexés dans lesquels :
La figure 1 est une vue schématique de coupe longitudinale d'un vilebrequin monté dans une chambre de carter-cylindres.
La figure 2 est une vue schématique de profil d'un carter cylindres avec un vilebrequin monté dans la chambre du carter-cylindres.
La figure 3 est une vue schématique de coupe longitudinale d'un vilebrequin monté dans une chambre de carter-cylindres et fixé avec un volent moteur.

### Description détaillée des figures

Les descriptions qui suivent se réfèrent à l'axe longitudinal X du vilebrequin.

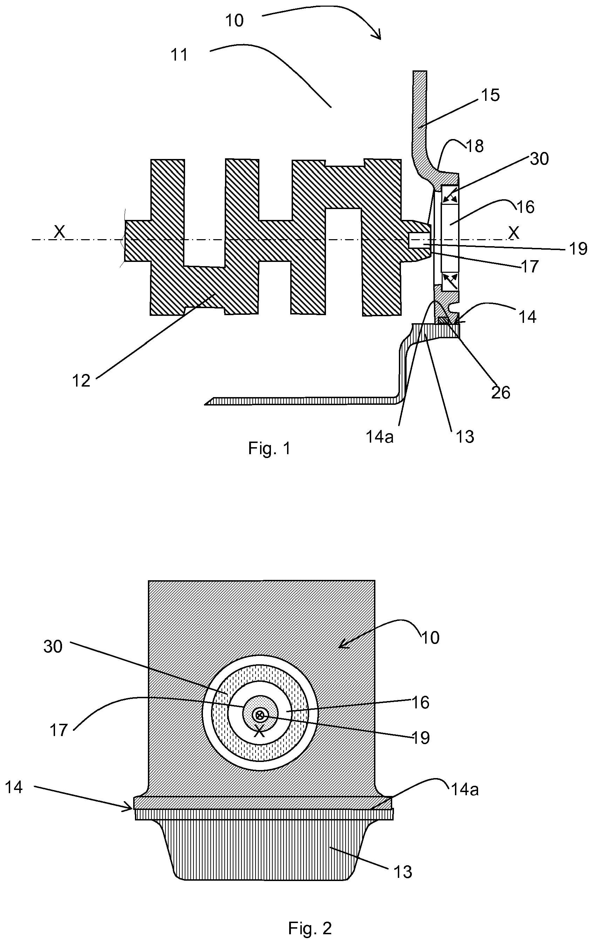

Selon la figure 1, un moteur à combustion interne comprend un carter-cylindres 10 comportant une chambre de bielles 11 dans laquelle est logé un vilebrequin 12 monté mobile en rotation autour d'un axe longitudinal X. Ledit vilebrequin est maintenu dans ladite chambre par des paliers (non représentés) fixés dans la paroi de la chambre de bielles du carter-cylindres.

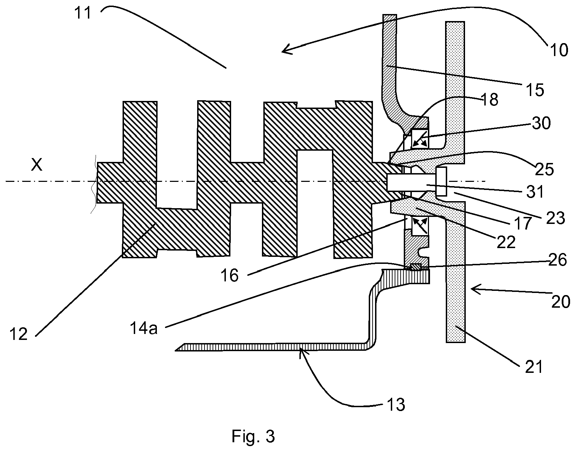

Le carter-cylindres 10 est disposé au dessus d'un carter d'huile 13 et présente une surface de contact définissant un plan de joint ou de liaison 14 avec ledit carter d'huile au niveau d'un trottoir d'étanchéité 14a réalisé sur le carter-cylindres. Le carter-cylindres 10 comporte dans une paroi d'extrémité droite 15 un orifice 16 de connexion sensiblement circulaire entourant partiellement une extrémité droite 17 du vilebrequin 12 qui est adaptée pour être fixée à un volant moteur 20 représenté en figure 3.

Le vilebrequin est un dispositif mécanique principal du dispositif bielle-manivelle assurant la transmission de l'effort généré par la combustion du carburant vers la boîte de vitesses. Il permet la transformation du mouvement linéaire rectiligne non uniforme des pistons en un mouvement continu de rotation. Le vilebrequin entraîne tous les éléments du moteur ayant besoin d'un mouvement rotatif tels que la transmission primaire, l'alternateur (non représentés) ou les contre-arbres d'équilibrage dont le volant moteur. Le vilebrequin est composé de plusieurs tourillons alignés formant l'axe central. Entre ces tourillons se trouvent, excentrés, des manetons - ou manivelles dans le cas général - sur lesquels sont montées par une extrémité, des bielles reliées à une extrémité opposée à des pistons (non représentés). Le vilebrequin comporte une première extrémité gauche liée avec une roue dentée entourée par une courroie ou une chaîne de distribution (non représentées).

L'extrémité droite 17 du vilebrequin 12 disposée en vis-à-vis de l'orifice d'extrémité droite 15 du carter cylindres est logée dans la chambre de bielles de sorte que le vilebrequin est en totalité logé dans ladite chambre de bielles 11. Ladite extrémité droite du vilebrequin comporte une partie d'extrémité conique 18 et un trou borgne taraudé 19 selon l'axe du vilebrequin destiné à recevoir une vis de fixation. La conicité de la partie d'extrémité 18 du vilebrequin est comprise entre 2% et 5% par rapport à l'axe du vilebrequin, c'est-à-dire que la paroi externe du vilebrequin est sensiblement inclinée vers l'axe longitudinal du vilebrequin en direction du volant moteur.

Le volant moteur 20 est une masse mobile, de manière connue un disque d'acier 21 ou de fonte fixé à un vilebrequin, entraînée par une force motrice dans un mouvement rotatif et le lien direct entre le moteur et l'embrayage (non représentés). Le volant moteur fixé à l'embrayage est entouré d'une couronne dentée sur laquelle vient s'engrener le démarreur pour lancer le moteur. Par sa masse et son inertie, le volant moteur 20 sert à réguler et à équilibrer le mouvement rotatif du vilebrequin 12 pour limiter les vibrations et de réduire les bruits provenant du moteur (non représenté). Le volant moteur 20 emmagasine l'énergie produite par l'explosion-détente et la restitue lors du temps mort, régulant ainsi la rotation du vilebrequin. Il est ainsi fixé solidaire au vilebrequin sans jeu en rotation dans le but de rendre plus régulier le régime de fonctionnement, en s'opposant aux irrégularités du moteur entrainé par les pistons.

Selon l'invention en référence à la figure 3, le disque 21 du volant moteur est prolongé axialement (en direction de l'extrémité droite 17 du vilebrequin) par une protubérance 22 en forme d'un tube de connexion sensiblement cylindrique dont la partie intérieure 23 est destinée à être traversée par une vis de fixation 31. Ladite partie intérieure comporte une partie d'extrémité 25 destinée au contact avec l'extrémité droite 17 du vilebrequin sensiblement conique et complémentaire à ladite partie d'extrémité 17 du vilebrequin, et une paroi d'appui pour la tête de vis. Ladite protubérance 22 peut par exemple comporter une rainure sensiblement radiale pour permettre une déformation du tube de connexion notamment lors de la fixation dudit volant à l'extrémité droite du vilebrequin.

De manière préférentielle, le volant moteur est issu de fonderie et réalisé en fonte ou en acier avec une résistance élastique supérieure à 400MPa. La protubérance du volant moteur est adaptée à se déformer lors de la fixation du volant moteur à l'extrémité 17 du vilebrequin.

Le carter-cylindres selon l'invention comporte également une bague à lèvres 30 disposée dans l'orifice d'extrémité 16 du carter-cylindres pour entourer la protubérance 22 du volant moteur. La bague à lèvres 30 est de manière connue en matière élastomère ou caoutchouc destinée à assurer l'étanchéité de la chambre de bielles 11.

Selon la figure 2, la paroi d'extrémité droite 15 du carter-cylindres est continue vers le bas en direction du carter d'huile jusqu'au plan de joint 14 avec le carter d'huile. Le trottoir d'étanchéité 14a sur le carter-cylindres d'huile est donc continu c'est-à-dire qu'il n'est pas interrompu par exemple par une ouverture ou une échancrure, ce qui permet de disposer un joint d'étanchéité 26 entre le carter-cylindres et le carter d'huile en une pièce pour une plus grande facilité de mise en place et une meilleure fiabilité de l'étanchéité.

La liaison entre le carter-cylindres 10 et le carter d'huile 13 est simple et le carter d'huile 13 est de manière préférentielle en une seule pièce en matière plastique.

Lors du montage, le carter cylindres 10 issu de fonderie est dans une première étape renversé de sorte que la surface comportant le trottoir d'étanchéité soit positionnée vers le haut.

Les pistons reliés à une première extrémité des bielles sont insérés dans les cylindres associés du carter cylindres, les bielles sont fixées à leur deuxième extrémité aux manetons du vilebrequin dont les extrémités longitudinales sont logées dans la chambre de bielles et dont les tourillons sont entourés par les paliers et chapeaux de paliers fixés à la paroi de la chambre de bielles.

Le joint d'étanchéité 26 est disposé sur le trottoir d'étanchéité 14a et le carter d'huile 13 est alors fixé en appui contre le carter cylindres 10 par le plan de joint 14.

La bague à lèvres 30 est alors disposée en bordure de l'orifice 16 de connexion du carter-cylindres.

La protubérance 22 du volant moteur 20 est enfoncée autour de la partie conique d'extrémité 17 du vilebrequin en traversant ladite bague à lèvres 30. La faible conicité de ladite partie d'extrémité 17 du vilebrequin permet un maintien statique du vilebrequin et du volant moteur reliés ensemble c'est-à-dire que ledit maintien ne nécessite pas de moyen de maintien avant l'assemblage des deux éléments. Une vis de fixation 31 est enfoncée ensuite au travers de la partie intérieure 23 de la protubérance pour être vissée dans le trou taraudé de fixation 19 dans l'extrémité du vilebrequin. La conicité de la liaison entre le vilebrequin 12 et le volant moteur 20 supprime tout jeu et évite tout mouvement relatif entre le volant moteur et le vilebrequin, notamment de rotation.

L'objet de l'invention est atteint. Le moteur comprend un carter cylindres disposé au dessus d'un carter d'huile avec une étanchéité simple et robuste, la fixation du volant moteur à l'extrémité du vilebrequin est réalisée sans nécessiter de plaque d'étanchéité fixée contre la paroi d'extrémité du carter cylindres.

## Revendications

1. Moteur à combustion interne de véhicule automobile comportant :
- un carter d'huile (13) au-dessus duquel est fixé
- un carter-cylindres (10) comportant une chambre (11) de bielles délimitée par une paroi (15) présentant un orifice (16), dans laquelle est logé un vilebrequin comportant une extrémité (17) fixée solidaire en rotation à un volant moteur (20) disposé à l'extérieur de ladite chambre et comportant une protubérance tubulaire (22) apte à entourer l'extrémité (17) du vilebrequin, ladite protubérance (22) du volant débouchant à l'intérieur de la chambre (11) par l'orifice circulaire (16)
**caractérisé en ce que** l'extrémité (17) du vilebrequin est disposée dans la chambre (11) de bielles.

2. Moteur selon la revendication 1, **caractérisé en ce que** l'extrémité (17) du vilebrequin (12) est conique.

3. Moteur selon l'une quelconque des revendications 1 ou 2, **caractérisé en ce que** la protubérance (22) tubulaire du volant comporte une partie intérieure (23) présentant une partie conique (25) complémentaire à l'extrémité (17) du vilebrequin, ladite partie intérieure (23) est destinée à être traversée par un moyen de fixation du volant au vilebrequin.

4. Moteur selon l'une quelconque des revendications 1 à 3, **caractérisé en ce que** la conicité de l'extrémité (17) du vilebrequin est comprise entre 2° et 7°.

5. Moteur selon l'une quelconque des revendications 1 à 4, **caractérisé en ce que** le volant moteur (20) présente une résistance élastique supérieure à 400 MPa.

6. Moteur selon l'une quelconque des revendications 1 à 5, **caractérisé en ce que** la protubérance (22) du volant moteur (20) est entourée par une bague à lèvre annulaire (30).

7. Moteur selon l'une quelconque des revendications 1 à 6, **caractérisé en ce que** l'orifice (16) est circulaire et disposé au dessus d'un plan de joint (14) entre le carter-cylindres (10) et un carter d'huile (13).

8. Moteur selon l'une quelconque des revendications 1 à 7, **caractérise en ce que** le carter-cylindres (10) comporte un trottoir d'étanchéité (14a) continu de liaison avec le carter d'huile (13).

9. Moteur selon l'une quelconque des revendications 1 à 8, **caractérisé en ce que** le carter d'huile (13) fixé en dessous du carter-cylindres (10) est en plastique.

10. Véhicule automobile comportant un moteur selon la revendication 9.

## Patentansprüche

1. Verbrennungsmotor eines Kraftfahrzeugs, umfassend:
- ein Ölgehäuse (13), über dem ein
- Zylindergehäuse (10) befestigt ist, umfassend eine Stangenkammer (11), die von einer Wand (15) begrenzt ist, die eine Öffnung (16) aufweist, in der eine Kurbelwelle angeordnet ist, umfassend ein Ende (17), das drehfest an einem Antriebsschwungrad (20) befestigt ist, das außerhalb der Kammer angeordnet ist, und umfassend eine röhrenförmige Ausstülpung (22), die geeignet ist, das Ende (17) der Kurbelwelle zu umgeben, wobei die Ausstülpung (22) des Schwungrads innerhalb der Kammer (11) durch eine kreisförmige Öffnung (16) mündet,
**dadurch gekennzeichnet, dass** das Ende (17) der Kurbelwelle in der Stangenkammer (11) angeordnet ist.

2. Motor nach Anspruch 1, **dadurch gekennzeichnet, dass** das Ende (17) der Kurbelwelle (12) konisch ist.

3. Motor nach einem der Ansprüche 1 oder 2, **dadurch gekennzeichnet, dass** die röhrenförmige Ausstülpung (22) des Schwungrads einen inneren Teil (23) umfasst, der einen komplementären konischen Teil (25) zum Ende (17) der Kurbelwelle aufweist, wobei der innere Teil (23) dazu bestimmt ist, von einem Befestigungsmittel des Schwungrads an der Kurbelwelle durchquer zu werden.

4. Motor nach einem der Ansprüche 1 bis 3, **dadurch gekennzeichnet, dass** die Konizität des Endes (17) der Kurbelwelle zwischen 2° und 7° beträgt.

5. Motor nach einem der Ansprüche 1 bis 4, **dadurch gekennzeichnet, dass** das Antriebsschwungrad (20) einen elastischen Widerstand über 400 MPa aufweist.

6. Motor nach einem der Ansprüche 1 bis 5, **dadurch gekennzeichnet, dass** die Ausstülpung (22) des Antriebsschwungrads (20) von einem Ring mit ringförmiger Lippe (30) umgeben ist.

7. Motor nach einem der Ansprüche 1 bis 6, **dadurch gekennzeichnet, dass** die Öffnung (16) kreisförmig ist und über einer Verbindungsebene (14) zwischen dem Zylindergehäuse (10) und einem Ölgehäuse (13) angeordnet ist.

8. Motor nach einem der Ansprüche 1 bis 7, **dadurch gekennzeichnet, dass** das Zylindergehäuse (10) ein durchgehendes Dichtungstrottoir (14a) mit dem Ölgehäuse (13) umfasst.

9. Motor nach einem der Ansprüche 1 bis 8, **dadurch gekennzeichnet, dass** das Ölgehäuse (13), das unter dem Zylindergehäuse (10) angeordnet ist, aus Kunststoff ist.

10. Kraftfahrzeug, umfassend einen Motor nach Anspruch 9.

## Claims

1. Motor vehicle internal combustion engine, comprising:
- an oil housing (13) above which there is fixed
- a cylinder crankcase (10) comprising a connection rod chamber (11) delimited by a wall (15) having a hole (16), which chamber accomomodates a crankshaft comprising an end (17) which is fixedly joined in terms of rotation to a flywheel arranged outside the chamber (20) and comprising a tubular protuberance (22) which is capable of surrounding the end (17) of the crankshaft, the protuberance (22) of the flywheel opening inside the chamber (11) via the circular hole (16),
**characterized in that** the end (17) of the crankshaft is arranged in the connection rod chamber (11).

2. Engine according to Claim 1, **characterized in that** the end (17) of the crankshaft (12) is conical.

3. Engine according to either of Claims 1 and 2, **characterized in that** the tubular protuberance (22) of the flywheel comprises an inner portion (23) which has a conical portion (25) which complements the end (17) of the crankshaft, a fixing means for the flywheel with respect to the crankshaft being intended to extend through the inner portion (23).

4. Engine according to one of Claims 1 to 3, **characterized in that** the conicity of the end (17) of the crankshaft is between 2° and 7°.

5. Engine according to one of Claims 1 to 4, **characterized in that** the flywheel (20) has a tensile strength greater than 400 MPa.

6. Engine according to one of Claims 1 to 5, **characterized in that** the protuberance (22) of the flywheel (20) is surrounded by a ring having an annular lip (30).

7. Engine according to one of Claims 1 to 6, **characterized in that** the hole (16) is circular and arranged above a joint plane (14) between the cylinder crankcase (10) and an oil housing (13).

8. Engine according to one of Claims 1 to 7, **characterized in that** the cylinder crankcase (10) comprises a continuous sealing track (14a) for connection to the oil housing (13).

9. Engine according to one of Claims 1 to 8, **characterized in that** the oil housing (13) which is fixed below the cylinder crankcase (10) is of plastics material.

10. Motor vehicle comprising an engine according to Claim 9.
